**Europäisches Patentamt**

(19) **European Patent Office**

**Office européen des brevets**

(11) Veröffentlichungsnummer: **0 076 885**
**A1**

(12) # EUROPÄISCHE PATENTANMELDUNG

(21) Anmeldenummer: **81730105.4**

(22) Anmeldetag: **09.10.81**

(51) Int. Cl.³: **F 01 K 21/04,** F 02 G 5/00, F 02 B 75/02, F 01 K 23/10

(43) Veröffentlichungstag der Anmeldung: **20.04.83** **Patentblatt 83/16**

(71) Anmelder: **Messinger, Bernd-Michael, Bautzenerstrasse 3, D-1000 Berlin 62 (DE)**

(72) Erfinder: **Messinger, Bernd-Michael, Bautzenerstrasse 3, D-1000 Berlin 62 (DE)**

(74) Vertreter: **Miehe, Manfred, Dipl.-Chem., Falkenried 4, D-1000 Berlin 33 (DE)**

(84) Benannte Vertragsstaaten: **AT BE CH DE FR GB IT LI LU NL SE**

(54) **Verfahren hohen Wirkungsgrades zur Umwandlung von Kraftstoffen in Antriebsenergie und zugeordneter kombinierter Verbrennungs- und Dampfmotor.**

(57) Es wird ein Verfahren und zugeordnete Vorrichtung geschaffen, durch die die Energie der Abgase und die Energie der erhitzten Zylinderwände eines Verbrennungsmotors teilweise in zusätzliche Antriebsenergie umgewandelt werden, wodurch ein erhöhter Wirkungsgrad erreicht wird. Das Verfahren bedient sich eines kombinierten Verbrennungs- und Dampfmotors dergestalt, daß die bei dem Verbrennungsprozeß anfallende Wärme teilweise in Wasserdampf umgewandelt und zum Antireb der Kolben in die Zylinder abwechselnd zu einem herkömmlichen Verbrennungstakt eingeführt wird.

EP 0 076 885 A1

ACTORUM AG

0076885

PATENTANWALT
**MANFRED MIEHE**
Diplom-Chemiker

D-1000 BERLIN 33  8.10.81
FALKENRIED 4
Telefon: (030) 831 19 50
Telegramme: INDUSPROP BERLIN
Telex: 0185 443

Verfahren hohen Wirkungsgrades zur Umwandlung von Kraftstoffen
in Antriebsenergie und zugeordneter kombinierter Verbrennungs-
und Dampfmotor

Verbrennungsmotoren sind Wärmekraftmaschinen, bei denen in einem
Zylinder durch Verbrennung eines Brennstoff-Luft-Gemisches ein
Kolben bewegt und so über diesen die Wärmeenergie in mechanische
Energie umgewandelt wird. Von überragender wirtschaftlicher Bedeutung sind hierbei der Otto-Motor und der Dieselmotor, die nach
dem Viertaktverfahren arbeiten, wobei bei dem ersteren überwiegend ein brennbares Gasgemisch dem Verbrennungsraum zugeführt
und durch einen hochgespannten elektrischen Zündfunken fremdgezündet wird, während bei dem letzteren eine Selbstentzündung des
eingespritzten Kraftstoffes erfolgt durch die hohe Lufttemperatur,
die sich durch eine vergleichsweise hohe Kompression ergibt.

Dampfmotoren sind Kolbendampfmaschinen hoher Schnelläufigkeit,
die wegen ihrer hohen Drehzahl leichter konstruiert werden können,
als eine langsam laufende Dampfmaschine gleicher Leistung, so daß
ihr nicht stationärer Einsatz möglich ist. Für Fahrzeuge wäre
der Dampfmotor wegen des nahezu hyperbelförmigen Anstiegs des
Drehmomentes bei abfallender Drehzahl ideal. Da jedoch bisher
das Problem der wirtschaftlichen Dampferzeugung auf kleinem Raum
noch nicht gelöst ist, haben Dampfmotoren noch keinen Eingang in
die praktische Fahrzeugtechnik gefunden.

Verbrennungsmotore weisen zwar einen besseren Wirkungsgrad als
Dampfmotore auf, ihr Wirkungsgrad ist aber vergleichsweise zu
Elektromotoren gering und liegt in der Größenordnung von 35%, so
daß die geleistete Nutzarbeit vergleichsweise zu der für den
Betrieb aufgewendeten Energie sich nur auf etwa 1/3 beläuft,

- 2 -

BAD ORIGINAL

wobei 1/3 jeweils durch das Abgas bzw. Zylinderkühlung verloren geht. Da die für den Betrieb von Verbrennungsmotoren erforderlichen Kohlenwasserstoff-Fraktionen immer teurer werden, hat es nicht an Versuchen gefehlt, Treibstoffeinsparungen auch dadurch zu bewerkstelligen, daß der Wirkungsgrad durch konstruktive Veränderungen der unmittelbar am Verbrennungsvorgang beteiligten Bauelemente zu verbessern. Die einschlägigen Verbesserungen sind aber über die Jahre hin relativ geringfügig geblieben.

Seit längerer Zeit wird die kinetische Energie der Abgase zum Antrieb einer Abgasturbine angewandt, die mit Turbolader für die Luftverdichtung zusammenarbeitet und zu einer vorverdichteten Frischladung durch Steuerung des Ansaugdrucks führt, und hierdurch ergibt sich eine Vergrößerung der Füllung des Arbeitsraumes (Erhöhung des spezifischen Ladungsgewichtes), der Todraum wird besser gespült und die Ladungswechselarbeit positiv.
Diese Turboaufladung verbessert die spezifische Leistung des Motors. Allerdings wird die Größe der Turboaufladung über die kinetische Energie der abfließenden Verbrennungsgase bei Ottomotoren durch dieKLopfgrenze des Kraftstoffes, bei Dieselmotoren durch die thermische und mechanische Beanspruchung des Motors begrenzt.

Es sind auch schon Vorschläge bekanntgeworden, einen Verbrennungsmotor mit einem Dampfmotor zu kombinieren, dergestalt, daß die bei dem Verbrennungsprozess anfallende kinetische Energie und der Wärmegehalt der mit hoher Geschwindigkeit aus den Verbrennungsräumen ausströmenden Gase genutzt werden. Hierzu gehören:

Gemäß der DE-OS 25 51 268 ist es bekanntgeworden, den Verbrennungsmotor und seine Abgasleitungen mit einer Einrichtung zu umgeben, etwa in Form eines entsprechend dimensionierten und mit Wasser gefüllten Gehäuses, in dem Wasserdampf erzeugt und einer Dampfmaschine zugeführt wird, die ihrerseits eine sogenannte Hilfsmaschine antreibt. Dieselbe kann für den zusätzlichen Antrieb des Fahrzeugs Strom erzeugen oder direkt an die Abtriebselemente des Verbrennungsmotors gekoppelt sein.

Insbesondere ist es auf dem einschlägigen Gebiet gemäß der DE-OS 26 18 584 bekanntgeworden, in der in der letztgenannten Veröffentlichung beschriebenen Art Wasserdampf zu erzeugen und über eine nachgeschaltete Dampfturbine oder Dampfmaschine mit angekoppeltem Stromerzeuger eine zusätzliche Antriebsquelle zur Verfügung zu haben. Hierbei ergeben sich die Schwierigkeiten, daß eine Synchronisation der Übertragungselemente nur schwer zu erreichen ist. Es ist auch eine direkte Beaufschlagung der von der Dampfmaschine gelieferten Kraft auf Abtriebsteile des Motors vorgesehen. Nach wahlweisen Ausführungsformen kann der Kühlwasser-Dampfkreislauf geschlossen oder offen sein.

Vorrichtungen der angegebenen Art haben jedoch keine Einführung in die Praxis erfahren, und so bleibt das Problem einer wirtschaftlichen Kombinierung von Verbrennungs- und Dampfmotor unter vergleichbar hoher Einsparung an Treibstoff bedingt durch einen stark verbesserten Wirkungsgrad bisher noch ungelöst.

Die vorliegende Erfindung stellt es sich nun zur Aufgabe, eine Vorrichtung der eingangs angegebenen Art so zu verbessern, daß nicht nur theoretisch, wie nach dem Stand der Technik, ein hoher Wirkungsgrad erzielt und eine vorteilhafte Anwendung im Verkehrswesen sichergestellt ist aufgrund einer zwangsläufigen Steuerung der einzelnen Arbeitsgänge oder Takte, wobei eine Anlehnung an erprobte Verbrennungsmotoren erfolgt und nur relativ geringfügige Modifizierungen erforderlich sind.

Diese Aufgabe wird erfindungsgemäß nun dadurch gelöst, daß der Dampf zum Antrieb der Kolben in die Zylinder abwechselnd zu einem herkömmlichen Verbrennungstakt eingeführt wird.

Weitere erfindungsgemäße Merkmale ergeben sich aus den Unteransprüchen.

Die erfindungsgemäß erzielten Vorteile sind insbesondere darin zu sehen, daß es zum ersten Mal gelungen ist, in effizienter Weise eine Kombination aus Verbrennungs- und Dampfmotor zu schaffen, indem der durch die Verbrennungsgase auf einen Druck entsprechend demjenigen zum Zeitpunkt des Verbrennungsvorgangs

- 4 -

erhitzte Wasserdampf direkt und nicht indirekt wie nach dem Stand der Technik zu dem Antrieb des Motors vermittels direkter Aufladung auf den Arbeitskolben angewandt wird. Diese direkte Beaufschlagung räumt auch den Nachteil einschlägiger Vorrichtungen nach dem Stand der Technik aus, die dadurch bedingt werden, daß eine indirekte Wärmezuführung erfolgt mit dadurch bedingter entsprechender Verzögerung der Ausbildung der zusätzlichen Energie. Dies wird durch die zwangläufig vorliegende große Wärmekapazität des Kühlmediums bedingt.

Ein Ausführungsbeispiel der Erfindung ist in den Zeichnungen dargestellt und wird im folgenden näher beschrieben. Es zeigen:

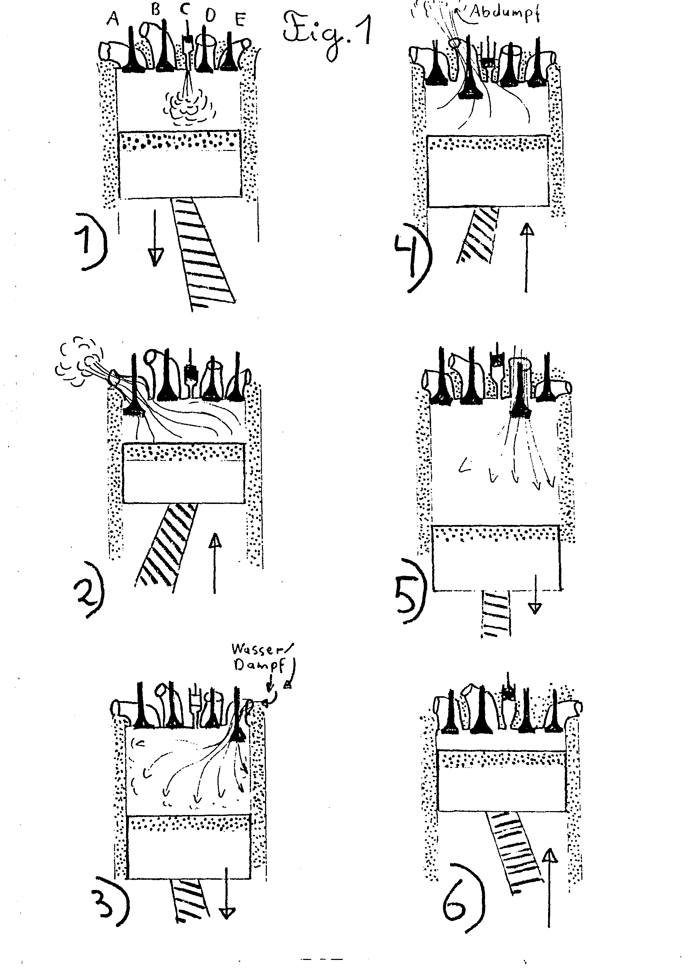

Fig. 1 eine schematische Querschnittsdarstellung einer Zylinder-Kolbenanordnung und gibt die bei dem Betrieb des Erfindungsgegenstandes ablaufenden Arbeitstakte wieder;

Fig. 2 eine schematische Querschnittsdarstellung des Erfindungsgegenstandes.

Der erfindungsgemäße kombinierte Verbrennungs- und Dampfmotor kann unter Anpassung an das vorgesehene Anwendungsgebiet die bei herkömmlichen Verbrennungsmotoren übliche Anzahl an Zylindern aufweisen. Das nachfolgende Ausführungsbeispiel wird anhand eines Zylinders eines entsprechend abgewandelten Dieselmotors erläutert.

Am Kolbenkopf ist in herkömmlicher Weise ein Abgasventil A, ein Lufteinlaßventil D und eine Dieseleinspritzpumpe C angeordnet. Zusätzlich befinden sich dort ein Abdampfventil B und ein Dampfeinlaßventil E. Der gesamte Motorblock ist im Gegensatz zum Stand der Technik mit einer Wärmeisolation umgeben, die hier punktiert gezeigt ist. Hierdurch ergibt sich der weitere Vorteil eines schnelleren Warmlaufens beim Start.

Die erfindungsgemäße Vorrichtung führt sechs Arbeitstakte aus, von denen die Arbeitstakte 1 und 3 der Erzeugung von Antriebsenergie dienen wie folgt:
Der Arbeitstakt 1 führt zu der Verbrennung des Kraftstoffes und treibt den Kolben nach unten, der Arbeitstakt 2 führt zu dem Aus-

- 5 -

stoßen der verbrannten Gase, der Arbeitstakt 3 treibt den Kolben wieder nach unten durch Einführen von überhitztem Wasserdampf, der Arbeitstakt 4 führt zu dem Ausstoßen des Abdampfes, der Arbeitstakt 5 führt zu dem Einführen von Frischluft und der Arbeitstakt 6 zum Komprimieren derselben in Vorbereitung auf das Einspritzen und Zünden des Kraftstoffes gemäß Arbeitstakt 1.

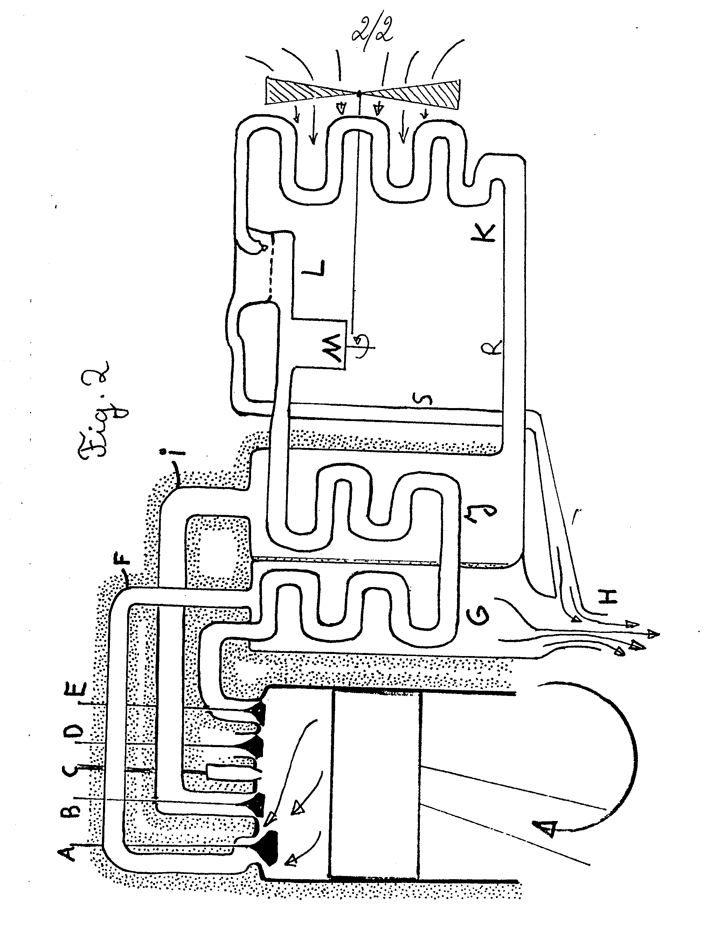

Die Figur 2 zeigt eine bevorzugte erfindungsgemäße Ausführungsform, bei der der Abdampf kondensiert und in das System zurückgeführt wird, wodurch sich eine sehr erhebliche Einsparung an Wasser ergibt. Dies ist bedeutsam einmal aus Gründen der Raumbeanspruchung für den Wasserbehälter in einem Fahrzeug und weiterhin aus Gewichtsgründen aufgrund der nach dem Wassertanken zu transportierenden Wassermengen. Die in Figur 2 gezeigte Vorrichtung weist die folgenden baulichen Merkmale mit der entsprechenden Verfahrensführung auf. Die Ventile A, B, D und E besitzen die weiter oben beschriebene Funktion, das gleiche gilt für die Einspritzpumpe C und die schraffiert gezeigte Wärmeisolierung. Die aus dem Abgasventil A ausströmenden Abgase strömen durch den isolierten Gaskanal F und sodann durch den Abgaswärmeaustauscher G zunächst mit einer Temperatur von etwa 600°C und erhitzen dabei den Wasserdampf auf etwa 250°C bevor sie, gegebenenfalls beim Durchtritt durch einen Schalldämpfer an dem Auspuff H ins Freie treten. Der aus dem Ventil B austretende Abdampf wird durch das Abdampfrohr I in einen Wärmeaustauscher für das Erhitzen von Wasser geführt, wobei die beiden Wärmeaustauscher G und J in der gezeigten Weise miteinander verbunden sind. Anschließend wird der bereits vorgekühlte Abdampf durch die Rohrleitung R in einen zwangsgekühlten Kühler K überführt und dort kondensiert. Das Kondensat wird im Abscheider L von mitgeführtem Abgas getrennt, das über die Leitung S dem Auspuff H zugeführt wird. Die Pumpe M drückt das Kondensat wieder in die beiden Wärmeaustauscher J und G. Aufgrund der so in den Wärmeaustauschern vorliegenden hohen Drücke sind die Rohre derselben aus Gewichtsgründen mit einem kleinen Querschnitt gefertigt. Die hierdurch bedingte Bildung von Dampfhoher

- 6 -

Feuchtigkeit ist ein Vorteil, da derselbe einen hohen Wärmeübergangskoeffizienten besitzt und die Sättigung des Dampfes erst durch die von den Zylinderwänden abgegebene Wärme erfolgt.

Zur allgemeinen Arbeitsweise und dem Wirkungsgrad des Erfindungsgegenstandes sei darauf hingewiesen, daß die vorgesehene Temperatur von 275°C des überhitzten Wasserdampfes ideal zu den Arbeitsbedingungen eines Otto-Motors oder Dieselmotors paßt, bei denen die zu Beginn der Verbrennung vorliegenden Spitzendrücke bei etwa 60 B ar liegen und dies ist ein Druckwert, den der Dampf bei etwa 275°C aufweist. Die Innentemperatur der Zylinderwände und des Kolbens betragen bei der erfindungsgemäß vorgesehenen Isolierung etwa 300°C, so daß zwischen der Temperatur des eingeführten Dampfes und den Temperaturverhältnissen in den Metallteilen der Verbrennungsanordnung praktisch keine Unterschiede bestehen und so nicht durch schockartige Temperaturveränderung des Wasserdampfes nach unten Kontraktionen und damit Leistungsverlust eintreten.

Da insgesamt gesehen die Zylinderwände eine etwas höhere Temperatur als der Dampf aufweisen, ergibt sich auch noch ein Kühleffekt für die Zylinderwandungen aufgrund der Tatsache, daß überhitzter gesättigter Wasserdampf einen außerordentlich hohen Wärmeübertragungskoeffizienten besitzt.

Im einzelnen zeigt die Berechnung folgendes. Ein Vierzylindermotor mit 3000 U/min. führt 50 Umdrehungen pro Sekunde aus. Bei der Annahme einer Stundengeschwindigkeit von 100 km und einem Verbrauch von 10 1 auf 100 km ergibt sich, daß ein Zylinder 2,5 1 Kraftstoff in einer Stunde verbraucht und 180 000 Umdrehungen ausführt, von denen 90 000 Arbeitstakte sind. 2,5 1 Kraftstoff enthalten 2,5 x 7500 Kcal = 19.000 Kcal = 80.000 kJ. Hierdurch ergibt sich, daß ein Arbeitstakt eine Arbeit von 0,9 kJ bei einem 100%igen Wirkungsgrad geleistet würde. Von den rund 2/3 als Wärme auftretenden Energie geht die eine Hälfte als Wärme in die Zylinder-Kolbenwand, was etwa 300 J entspricht.

- 7 -

- 7 -

Der eingeleitete Dampf nimmt folgende Energie auf:

$$\frac{11600 \text{ W}}{\text{m}^2\text{K}} = \frac{11600 \text{ J}}{\text{m}^2\text{K sec.}}$$

Bei einer inneren Oberfläche des Zylinders von etwa 0,04 m$^2$ und einer Verweildauer des Dampfes im Zylinder von $\frac{1}{50}$ sec. ergibt sich eine Temperaturdifferenz zwischen Wasserdampf und Zylinderwandung von 30$^\circ$.

$$\frac{11600 \text{ J} \cdot 0,04 \cdot 1 \cdot 30}{50} = 280 \text{ J}$$

Man sieht, daß praktisch die gesamte Wärmemenge aus dem Zylinder abgeführt werden kann, der eingedrückte Naßdampf wird sich bei dem Arbeitstakt 3 sofort zu Heißdampf sättigen, wobei die nachfolgende Expansion im Zylinder zu einer teilweisen Kondensation an den Zylinderwänden führen kann. Da nun die Zylinderwände mit einem dünnen Ölfilm überzogen sind, der die Wärmeübertragung geringfügig behindert, kann Tröpfchenkondensation erfolgen, die im Gegensatz zu der sonst üblichen Filmkondensation einen drei bis zehnmal größeren Wärmeübertragungsfaktor aufweist, so daß eine gute Kühlung und vollständige Entfernung des Wassers aus dem Zylinder gewährleistet ist.

Ein weiterer Vorteil dieser inneren Kühlung besteht darin, daß proportional zu der Kolbengeschwindigkeit, die eine Sinusfunktion darstellt, die Expansion und somit Abkühlung gleichzeitig einhergeht mit der Freigabe von noch relativ heißen Zylinderwandteilen. Außerdem werden die am stärksten erhitzten Zylinderteile, also am Zylinderkopf und der Kolbenoberfläche am längsten dem kühlenden Dampf ausgesetzt. Die unteren Zylinderwände, die nur relativ kurzzeitig in Berührung mit den heißen Verbrennungsgasen stehen, werden wiederum eine korrespondierende Zeitspanne lang mit dem kühlenden Dampf in Berührung gehalten. So werden Spannungen in den Zylinderwänden vermieden. Die Menge des eingedrückten Wasserdampfes richtet sich nach der Wärmekapazität. Diese beläuft sich beim Übergang von Wasser in Dampf auf etwa 2000 J/g, so daß das Eindrücken eines Dampf-Wassergemisches erforderlich erscheint,

- 8 -

das etwa 0,15 g Wasser enthält, das im Zylinder zur Verdampfung gebracht wird, und dies unter Berücksichtigung einer abzuführenden Wärmemenge entsprechend dem oben berechneten Wert von etwa 300 J.

Diese Wärmemenge steht jedoch schon im Verbrennungsabgas für die Vorwärmung in dem Wärmeaustauscher J zur Verfügung. Da zur Erhitzung von 0,1 g Wasser um 200$^o$ nur etwa 90 J benötigt werden, stehen noch etwa 200 J zur Dampferzeugung zur Verfügung, insbesondere da ja auch noch der Abdampf zum Vorwärmen benutzt werden kann. Sodann kann mit etwa 0,1 g Dampf 0,1 g Wasser pro Dampfexpansion in dem Zylinder gerechnet werden. Bei 90 000 Dampfhüben pro Stunde ergibt sich eine Wassermenge von 18 kg pro Zylinder und Stunde, entsprechend einem Bedarf von über 100 l Wasser pro 10 l Kraftstoffbedarf, unter der Voraussetzung, daß der Dampf an die Atmosphäre abgegeben wird. Bei Kondensation gemäß der Ausführungsform nach Figur 2 ergibt sich ein Wasserverbrauch, der wesentlich unter dem Benzinverbrauch liegt.

Der Erfindungsgegenstand ermöglicht es a) die Energie der Abgase und b) die Energie der erhitzten Zylinderwände teilweise in mechanische Energie umzuwandeln. Da je 1/3 der Kraftstoffenergie in die Zylinderwände bzw. Abgas gehen, ist die Verbesserung des thermischen Wirkungsgrades erheblich.

-1-

<u>Patentansprüche</u>

1. Verfahren hohen Wirkungsgrades zur Umwandlung von Kraftstoffen in Antriebsenergie, bei dem die Wärme der Verbrennungsabgase zur Dampferzeugung angewandt und der Dampf in zusätzliche Antriebs- energie umgewandelt wird, dadurch g e k e n n z e i c h n e t , daß der Dampf zum Antrieb der Kolben in die Zylinder abwechselnd zu einem herkömmlichen Verbrennungstakt eingeführt wird.

2. Vorrichtung zum Durchführen des Verfahrens nach Anspruch 1 in Form eines kombinierten Verbrennungs- und Dampfmotors, dadurch g e k e n n z e i c h n e t , daß der Zylinderkopf zusätzlich zu den Einlaß- und Auslaßvorrichtungen für Luft bzw. Luft-Kraftstoff- Gemisch und Abgas eine Einlaßanordnung (D) und eine Auslaßanordnung (E) für Wasserdampf aufweist, sowie der gesamte Zylinder Wärme- isoliert ist.

3Vorrichtung nach Anspruch 2, dadurch g e k e n n z e i c h n e t, daß zur Vorwärmung des zu verdampfenden Wassers ein Wärmeaustauscher (J) in der Wasserdampf-Abgasleitung (I) vorliegt, der in Verbindung mit einem Wärmeaustauscher (G) für die Erzeugung von Hochdruckwasserdampf in Verbindung steht, der mit der Abgasleitung (A) für die Verbrennungsgase in Verbindung steht.

4. Vorrichtung nach Anspruch 3, dadurch g e k e n n ze i c h n e t, daß die genannten Bauelemente ebenfalls wärmeisoliert sind.

5. Vorrichtung nach einem der vorangehenden Vorrichtungsansprüche, dadurch g e k e n n z e i c h n e t , daß dem Wärmeaustauscher (J) ein Kühler (K) für die Kondensation des Wasserdampfes und sodann ein Abscheider (L) für die Verbrennungsgase sowie ein Motor (M) für die Überführung des Wassers in die Wärmeaustauscher (J,G) und sodann in den Zylinder nachgeschaltet ist.

1/2

Fig. 1

A B C D E

1)

2)

3) Wasser/Dampf

Abdumpf

4)

5)

6)

Fig. 2

0076885

Europäisches
Patentamt

**EUROPÄISCHER RECHERCHENBERICHT**

Nummer der Anmeldung

EP 81 73 0105

| EINSCHLÄGIGE DOKUMENTE | | | | KLASSIFIKATION DER ANMELDUNG (Int. Cl.¹) |
|---|---|---|---|---|
| Kategorie | Kennzeichnung des Dokuments mit Angabe, soweit erforderlich, der maßgeblichen Teile | | betrifft Anspruch | F 01 K 21/04 F 02 G 5/00 F 02 B 75/02 F 01 K 23/10 |
| X/Y | <u>US - A - 1 629 677</u> (BULL)<br><br>* Seite 1, Zeilen 1-34, Zeile 77-<br>Seite 2, Zeile 46; Seite 3,<br>Zeilen 17-124; Figuren 1,3 *<br><br>& DE - C - 502 602 | | 1-5 | |
| Y | <u>US - A - 4 143 518</u> (KELLOGG-SMITH)<br><br>* Spalte 1, Zeilen 6-60; Spalte<br>2, Zeilen 6-27; Figur 1 * | | 2,3,4 | |
| D/A | <u>DE - A - 2 551 268</u> (WALTER)<br><br>* Seite 1, Absatz 1; Seite 4,<br>Absatz 3; Seite 13, Absatz 2 -<br>Seite 14, Absatz 1; Figur 1 * | | 3,5 | **RECHERCHIERTE SACHGEBIETE (Int. Cl.³)**<br><br>F 01 K<br>F 02 G<br>F 02 B |
| D/A | <u>DE - A - 2 618 584</u> (HENNECKE)<br><br>* Seite 4, Absätze 3,4; Seite 7,<br>Absatz 2; Figur 3 * | | 3,5 | |

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 11-05-1982 | KOOIJMAN |

EPA form 1503.1    06.78